# EUROPEAN PATENT APPLICATION

(11) **EP 2 014 837 A2**
(43) Date of publication of application: **14.01.2009**
(21) Application number: 08160181.7
(22) Date of filing: 11.07.2008
(51) Int. Cl.: E03B 1/04, E03D 5/00

(54) **Grey water recycling system**

(30) Priority: 13.07.2007 IT MI20071408
(71) Applicant: Universita' Degli Studi Di Catania, 95124 Catania (IT)
(72) Inventor: Modica, Carlo, 95125 Catania (IT)
(74) Representative: Borsano, Corrado

(57) **Abstract**

There is disclosed a system for the reclamation of gray waters from a wash basin for rinsing a toilet adapted to be integrated in pre-existing systems and sized according to a method based on the results of an experimental study, which is also an object of the patent. Furthermore, the method for the operation of the system provides that the control of the operation of the electric pump 8 for pumping the gray waters from the collection tank 1 to the rinsing case 50 is more rational, convenient and conservative.

## Description

### Field of the invention

The present invention relates to a system for the reclamation of gray waters coming from a wash basin for rinsing a toilet and to a method for the operation of the system.

### State of the art

The problem related to water saving has long been known. Specifically, nowadays it is widely accepted that water with high quality features should primarily be used for drinking purposes and that lower quality water, such as "gray waters", should be taken into account for other lower priority uses. The concept of reclaiming gray waters, that is waters coming from wash basins, showers/bathtubs and from electrical household appliances, such as washing machines and dishwashers, is not new and may readily be applied, in a domestic environment, in the operation of rinsing toilets; several experimental studies have indeed shown that significant percentages of the water used in homes are in fact consumed for the rinsing flushings. Already at the beginning of the sixties, various designs and systems for the reclamation of gray waters have been suggested by different authors, often not meeting a sufficient development because of the excessive manufacturing costs related to the complete rebuilding of the pre-existing hydraulic systems. Many of these systems indeed require the manufacturing of special separate pipe networks for recovering gray waters coming from different sources. Such systems presented by the known art provide the use of a collection tank, from which gray waters are pumped by means of an electric pump in the rinsing case of the toilet. Said tank, again according to the known art, results considerably large in size thus determining, as well as considerable bulky volumes, long detention times for gray waters within the tank itself, with the drawback of the water putrefying and exhaling unpleasant odors.

It should also be noted that the systems offered by the known art, not only require the rebuilding of the pre-existing pipe network, but the considerable size of the devices they are formed by, also hinders the space availability and the architectural integration within the toilets of present houses.

A further drawback of the systems offered by the known art relates to the generation of noise by the recovery pump which generally starts operating each time the flushing system of the toilet is operated, independently of the amount of water collected inside the collection tank for gray waters, thus causing an annoying switching on/off of the pump which is just as deleterious for the wear thereof.

### Summary of the invention

It is the object of the present invention to provide a system for the reclamation of gray waters coming from a gray water source, specifically a wash basin, for rinsing a toilet adapted to be integrated with pre-existing water systems, thus reducing to the minimum the installation size and costs.

The present invention, therefore, aims to achieve the above disclosed objects by providing a system for the reclamation of gray waters coming from a source of gray waters, specifically from a wash basin, for rinsing a toilet, in accordance with claim 1.

According to a further aspect of the invention there is provided a method for the operation of said system which reduces to the minimum the number of times the recovery pump is switched on for a greater acoustic comfort and for a longer durability of the pump itself.

The present invention, therefore, aims to achieve such an above mentioned object by providing a method for the operation of a system for the reclamation of gray waters for rinsing a toilet, in accordance with claim 13.

A further object of the present invention is to provide a method for sizing a collection tank for gray waters considering the previous object of improving the acoustic comfort so as to avoid excessive and unaesthetic dimensions although ensuring a good level of efficiency of the system.

The present invention, therefore, aims to achieve such an above mentioned object by displaying a method for sizing a system for the reclamation of gray waters for rinsing a toilet, in accordance with claim 14.

According to another aspect of the invention, said device is easily applied when said collection tank is sized according to the method which is also the object of the present invention.

The dependent claims disclose preferred embodiments of the invention and form an integral part of the description.

### Brief description of the figures

Further features and advantages of the invention will become more apparent in light of the detailed description of a preferred though not exclusive embodiment of a system for the reclamation of gray waters from a wash basin for rinsing a toilet, shown by way of non-limitative example with the aid of the accompanying drawings, in which:
Figure 1 depicts a diagram featuring four curves, each curve being related to a capacity value, in liters, of the rinsing case of a toilet, in which the abscissa axis corresponds to the capacity, in liters, of the collection tank and the ordinate axis corresponds to the saving, in terms of percentage, of drinking water for rinsing a toilet;
Figure 2 depicts a diagram of a preferred embodiment of a system for the reclamation of gray waters coming from a wash basin for rinsing a toilet, in which a collection tank is sized according to the method which is also the object of the present patent and the operation of which optimizes the acoustic comfort without penalizing the performance of the system itself;
Figure 3 shows a structural detail of the rinsing case of a toilet provided with a small insulating vessel 48 adapted to completely insulate the afferent drinking water piping from the gray waters;
Figure 4 relates to a flow chart of the method for the operation of the reclamation system, which is also the object of the present patent.

### Detailed description of a preferred embodiment of the invention

The sizing method of a collection tank, in accordance with the invention, comprises the following steps:
a. fixing an observation time period;
b. fixing a capacity for the rinsing case;
c. continuously measuring the volume of the gray waters produced by a source, for instance a wash basin, in said time period;
d. continuously measuring the volume of water discharged for the operation of the flushing system of a toilet included in the same bathroom;
e. steps b), c) and d) are repeated for different rinsing case capacities and for different samples of typical family units in order to obtain statistically significant results.

In conditions in which enough gray water is available, if the volume of the collection tank were endless, the saving would be total, i.e. 100%, as the water used in the rinsing of the toilet would all be gray water. As the capacity of said tank is reduced, the rinsing water must be integrated by drinking water, as a certain amount of gray water would arrive at the draining system because the maximum capacity of the collection tank has been reached.

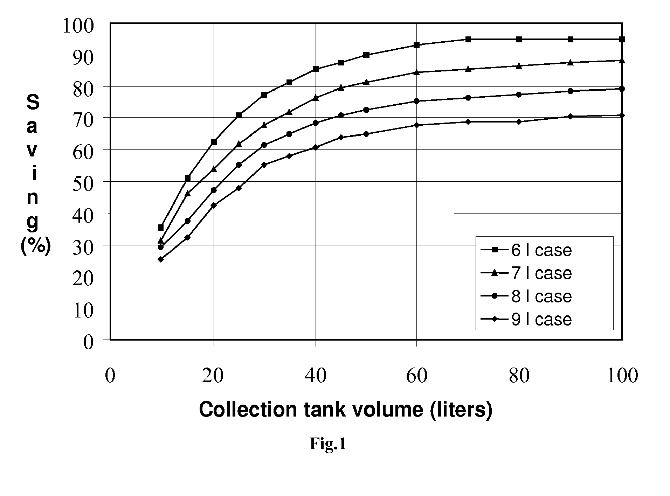

The diagram of Figure 1 shows the results of the experimental study and specifically the four curves for respective rinsing case capacities equivalent to 6, 7, 8, 9 liters, considering a wash basin as the source of gray waters. Similarly, the method may be applied to other sources such as showers, washing machines, etc.

With the aid of said diagram, the collection tank of a bathroom wash basin may be sized with a net capacity in the range between 30 and 40 liters so as to ensure water savings of the order of 60-80% in relation to the capacity of the rinsing case. In a preferred embodiment the system, which is the object of the present invention, consists of:
- a collection tank 1 for gray waters connected through a joint 3 to a gray water source M and through an overflow joint 4 to a draining system 100;
- an electric pump 8 of the submersible type which is immersed in the collection tank 1 and provided with a float 10 to obtain consensus to operate when the free surface is equal or higher than a certain predetermined level C, said electric pump being adapted to pump the waters collected in the collection tank 1 into a rinsing case 50 of a toilet;
- a rinsing case 50 of a toilet, connected to a drinking water piping P and through a joint 47 to a piping 7 which at the other end is connected, in turn, to said electric pump 8 through another joint 6;
- a traditional float O interlocked to a cut-off or valve N for opening/closing the delivery of the drinking water in the rinsing case 50;
- a level sensor 49 mounted on a wall of the rinsing case 50 at level A;
- handling means 71 and related electric connections 70 for the opening/closing control of at least one electrovalve and for the switching on/switching off of at least one electric pump;
- an electrovalve 45 for opening/closing the delivery of drinking waters through the piping P and interlocked with said control means 71.

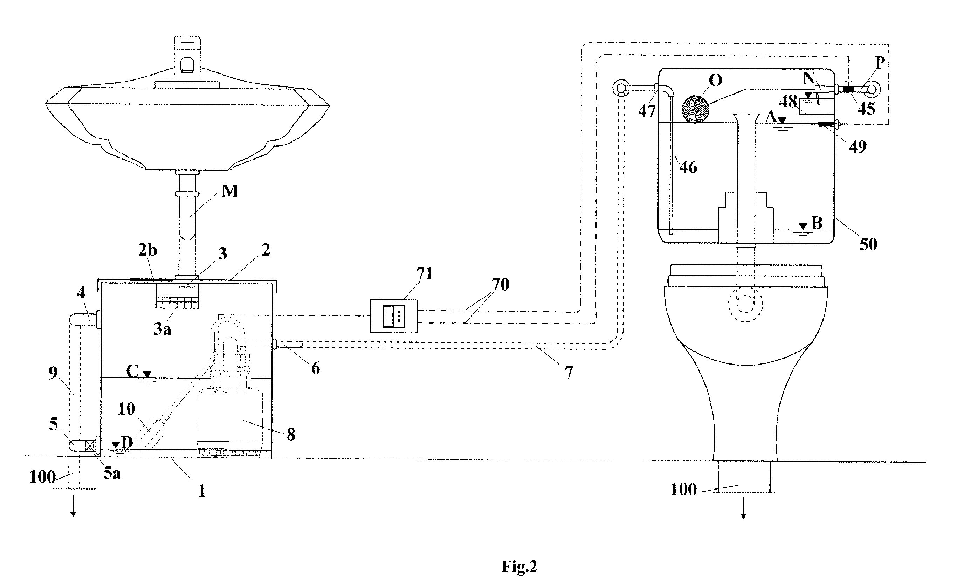

Figure 2 depicts a scale diagram of said preferred embodiment of the system showing that a recovery tank with such a capacity, excluding the encumbrance of the electric pump immersed, may easily be housed in a common bathroom cupboard for wash basins, thus reducing to the minimum the visual impact in the bathroom, and may easily be integrated in the pre-existing system.

Said collection tank 1 is provided with a sealing lid 2, with fairlead holes and at least four holes required for coupling respective joints, of which:
f. said joint 3 connected to the outlet M of a bathroom fixture that produces gray waters, for instance, a wash basin;
   - said spillover joint 4, also designated as "overflow" joint, placed at a height lower than the joint 3, adapted to avoid an excessive filling from causing an overflow on the floor and conveying the excess gray waters in the piping 9 connected, in turn, with the draining system 100;
   - a further draining joint 5, provided with a ball valve 5a, placed flush with the bottom of the tank or in any case at an as low as possible height of the collection tank 1 and, at the other end, connected with the piping 9 to allow the cleaning and maintenance interventions of the collection tank 1;
g. said joint 6 for the connection of the electric pump 8 to the delivery piping 7, which is connected at the other end with the rinsing case 50.

Specifically the level A, at which the level sensor 49 is placed, is made to correspond to the level at which the float O induces the closing of the cut-off N of the delivery of drinking water.

The electric pump 8 is of the submersible type for wastewaters, typically of the type for limited prevalence and flow rate, with a reduced operation noisiness and a geometry compatible with the size of the tank 1; furthermore, it is adapted to perform the pumping even in case of modest levels of collection in the tank of the order of a few millimeters, thus limiting the risk of residual stagnant water on the bottom of the collection tank 1.

The float 10, working for the electric pump, provides the electrical consensus to pump the gray waters into the rinsing case 50 of the toilet when the water collected in the tank 1 reaches at least the filling level C corresponding to a collection volume equivalent to the volume of the rinsing case 50 of the toilet. Vice versa, such a consensus is denied when, once the pumping has started, the float reaches the minimum level D.

A housing 3a is placed within the tank, at the joint 3, for housing at least one chlorine tablet that allows the disinfection of gray waters thus avoiding the possibility of developing bad odors. This housing may be reached through the appropriate hatch 2b which is integral with the lid 2.

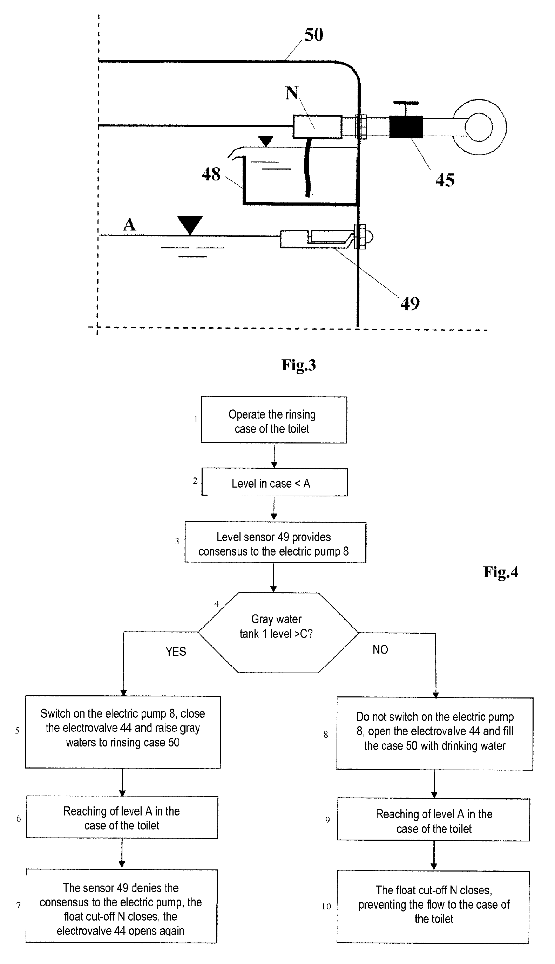

The rinsing case 50, in addition to the usual devices required for the normal operation, is provided with a level sensor 49. Such a miniaturized sensor does not require the presence of electric cables within the case itself and is connected to said control means 71. A small insulating vessel 48, serving to hydraulically separate the environment within the rinsing case 50 and the joint P conveying drinkable water (see Figure 3), is provided again within the case, at the inlet for drinking waters adjusted by the usual cut-off N with float O.

Such a small insulating vessel is mounted immediately below the inlet for the drinking water at a height above the spillover level of the rinsing case 50 of a toilet.

The end of the delivery piping 7 which opens into the case 50 is provided with a joint 47 and a small tube 46 for the inlet to the bottom of the rinsing tank to limit the dripping noise.

The opening/closing of the inlet piping for the drinking water is adjusted by the electrovalve 45 as well as by the cut-off N, both electrically connected to said control means 71.

When the tap of the wash basin is opened, the water used by the user, instead of being conveyed directly to the draining system, flows through the outlet M and the joint 3 to the tank 1, after being disinfected by means of the passage through the housing of the at least one chlorine tablet 3a. The water is collected within the tank 1 until the maximum level determined by the overflow level is reached; the possible excess water is conveyed into the piping 9 and from here to the draining system 100.

The operation method, see Figure 4, of the system object of the present invention is made of the following steps:
- at step 1, a rinsing case 50 of a toilet is operated thus determining the emptying
of the case itself with a subsequent rapid lowering of the water level therein;
- then, at step 2, the level becomes lower than a certain level A equivalent to the height at which a level sensor 49 is positioned;
- subsequently, at step 3, the level sensor 49 provides the electrical consensus in logical AND with the consensus provided by the float 10 interlocked with an electric pump 8, so that the latter switches on only if a level C equivalent to the capacity of the rinsing case 50 has been reached, thus pumping therein the water collected in a collection tank 1;
- therefore, at step 4, the level of the collected water in the collection tank 1 is verified to be equal or higher than said level C in relation to the consensus given by the float 10 interlocked with the electric pump 8;
- if said level C is exceeded the electric pump is switched on at step 5, thus raising the gray waters from the collection tank 1 to the rinsing case 50 and an electrovalve 45 closes in order to avoid the flow of drinking waters to the rinsing case 50;
- at step 6, the filling of the rinsing case takes place;
- then, when the filling has taken place, at step 7, the consensus to pump is suspended, a traditional ball O closes a cut-off N on the joint P which brings drinking water to the rinsing case 50 and the electrovalve 45, placed on the same joint P, is opened again;
- if instead said level C has not been reached in the collection tank 1 (at step 4, NO), the float 10 interlocked with the electric pump 8 does not provide the electrical consensus;
- therefore at step 8 the operation of the electric pump 8 is stopped and the electrovalve 45 is held open, thus the filling of the case 50 occurs exclusively by drinking waters due to the lowering of the traditional float O through the joint P and the insulating vessel 48;
- at step 9, level A in the rinsing case 50 is restored;
- then, at step 10, the traditional float O serving the cut-off N determines the closing of the delivery of drinking water.

It is therefore clear that the electric pump only starts operating when the amount of water contained in the tank 1 is enough to completely fill the case 50; in this manner, the switching on of the electric pump 8 for short times and for small volumes is avoided thus improving the acoustic comfort and the durability of the electric pump itself.

Furthermore, the consensus to switch on and to switch off the electric pump results from the logical AND operator between the consensus of the level sensor 49 for lowering the water level with respect to A and the consensus given by the float 10 reaching level C.

Said means 71 for handling and controlling said at least one electrovalve 45 and switching on/off said electric pump 8 are advantageously produced by means of an appropriate combination of relays, or by means of a dedicated electronic board.

The advantages resulting from such a system, sized according to the sizing method, object of the present patent, and operating according to the operation method which is also object of the present patent, are apparent:
- the system may easily be integrated in pre-existing systems;
- the visual impact is limited without impairing the performance of the system itself;
- the acoustic comfort as well as the life of the electric pump take advantage of a more rational operating cycle.

The specific modes to embody the invention described here do not limit the content of this application, which includes all of the variants of the invention according to the claims.

## Claims

1. A system for the reclamation of gray waters from a gray water source, specifically from a wash basin, for rinsing a toilet made of:
- a collection tank (1) for gray waters connected through a joint (3) to a gray water source (M) and through another overflow joint (4) to a draining system (100);
- an electric pump (8) of the submersible type, which is immersed in the collection tank (1) and provided with a float (10) to obtain the consensus to operate when the free surface is equal or higher than a certain predetermined level (C), said electric pump being adapted to pump the waters collected in the collection tank (1) into a rinsing case (50) of a toilet;
- a rinsing case (50) of a toilet, connected to a drinking water piping (P) and through a joint (47) to a piping (7) which at the other end is connected, in turn, to said electric pump (8) through a further joint (6);
- a float (O) interlocked to a cut-off or valve (N) for opening/closing the delivery of the drinking water in the rinsing case (50);
- a level sensor (49) mounted on a wall of the rinsing case (50) at the same level (A) as that at which said float (O) determines the closing of said cut-off (N);
- control means (71) and related electric connections (70) for the opening/closing control of at least one electrovalve and for the switching on/switching off of at least one electric pump;
- an electrovalve (45) for the opening/closing of the delivery of drinking waters through the piping (P) and interlocked to said control means (71);
said system being adapted to be integrated in pre-existing water systems and controlled by said control means (71) to maximize the acoustic comfort and the durability of said electric pump, the switching on of the latter being controlled only when the volume of gray waters contained in said collection tank is at least equal to the capacity of said rinsing case.

2. A system according to claim 1, wherein said collection tank (1) has a volume in the range between 30 and 40 liters if interlocked to a wash basin.

3. A system according to claim 2, wherein said collection tank (2) is sized excluding the encumbrance of the submersible-type electric pump (8), said tank being adapted to house the pump.

4. A system according to claim 1, wherein said electric pump (8) is **characterized by** intake capacity even in case of modest collection levels in the tank.

5. A system according to claim 1, wherein said collection tank (1) is provided with an emptying joint (5) and a corresponding ball valve (5a), placed flush with the bottom of the tank or in any case at an as low as possible height of the collection tank (1) and, at the other end, connected with a draining system (100) to allow cleaning and maintenance interventions of said collection tank (1).

6. A system according to claim 1 or 5, wherein said overflow joint (4) and said emptying joint (5) are connected to one another and to said draining system (100) by means of another piping (9).

7. A system according to claim 1, wherein said collection tank (1) is provided with a sealing lid (2) in which a housing (3a) is obtained for at least one chlorine tablet allowing the disinfection of the gray waters, thus avoiding the possibility of developing unpleasant odors and accessible through an appropriate hatch (2b) integral with the lid (2) itself.

8. A system according to claim 1, wherein said rinsing case (50) is provided with an insulating vessel (48) to completely separate the circuit of the drinking waters from the circuit of the recovery system avoiding infiltrations.

9. A system according to claim 1, wherein, when the level of liquid in the rinsing case (50) is lower than a certain predetermined level (A), said level sensor (49) provides the consensus to switch on and switch off the electric pump (8) in logical AND with the float (10) with which the electric pump itself is provided.

10. A system according to claims 1 and 9, wherein said control means (71) are obtained by means of a combination of relays or by means of a dedicated electronic board.

11. A system according to claim 1, wherein said float (10), the electric pump (8) is provided with, denies the consensus to operate if the gray water volume, corresponding to a predetermined level (C), is not at least equal to the capacity of the rinsing case (50).

12. A system according to claim 1, wherein said predetermined level (A) at which the level sensor (49) is positioned inside the rinsing case corresponds to the level at which the traditional float (10) determines the closing of the cut-off (N).

13. A method for the operation of a system for the reclamation of gray waters for rinsing a toilet comprising the following steps:
- (at step 1) a rinsing case (50) of a toilet is operated thus determining the emptying of the case itself with a subsequent rapid lowering of the water level therein;
- then (at step 2), the level becomes lower than a certain level (A) equivalent to the height at which a level sensor (49) is positioned;
- subsequently (at step 3), the level sensor (49) provides the electrical consensus in logical AND with the consensus provided by the float (10) interlocked with an electric pump (8), so that the latter switches on only if a level (C) equivalent to the capacity of the rinsing case (50) has been reached, thus pumping therein the water collected in a collection tank (1);
- therefore (at step 4), the level of the collected water in the collection tank (1) is verified to be equal or higher than said level (C) in relation to the consensus given by the float (10) interlocked with the electric pump (8);
- if said level (C) is exceeded, the electric pump is switched on (step 5), thus raising the gray waters from the collection tank (1) to the rinsing case (50) and an electrovalve (45) closes in order to avoid the flow of drinking waters to the rinsing case (50);
- (at step 6) the filling of the rinsing case takes place;
- then, when the filling has taken place (step 7), the consensus to pump is suspended, a traditional float (O) closes a cut-off (N) on the joint (P) which brings drinking water to the rinsing case (50) and the electrovalve (45), placed on the same joint (P), is opened again;
- on the contrary, if said level (C) has not been reached in the collection tank (1) (NO at step 4), the float (10) interlocked with the electric pump (8) does not provide the electrical consensus;
- therefore (at step 8), the operation of the electric pump (8) is stopped and the electrovalve (45) is held open, thus the filling of the case (50) occurs exclusively by means of drinking waters, because of the lowering of the traditional float (O), through the joint (P) and the insulating vessel (48);
- (at step 9), level (A) in the rinsing case (50) is restored;
- then (at step 10), the traditional float (O) serving the cut-off (N) determines the closing of the delivery of drinking water.

14. A method for sizing a collection tank of a system for the reclamation of gray waters coming from a water source of gray waters for rinsing a toilet comprising the following steps:
h. fixing an observation time period;
i. fixing a capacity for the rinsing case;
j. continuously measuring the volume of the gray waters produced by a source, for instance a wash basin, in said time period;
k. continuously measuring the volume of water discharged by operating the flushing system of a toilet included in the same bathroom;
l. steps b), c) and d) are repeated for different rinsing case capacities and for different samples of typical family units in order to obtain statistically significant results.
